(19) Europäisches Patentamt

European Patent Office

Office européen des brevets

(11) **EP 1 868 391 A1**

(12) **EUROPEAN PATENT APPLICATION**

(43) Date of publication:
**19.12.2007 Bulletin 2007/51**

(21) Application number: **07101338.7**

(22) Date of filing: **29.01.2007**

(51) Int Cl.:
***H04N 7/50*** (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.06.2006 KR 20060053891**

(71) Applicant: **SAMSUNG ELECTRONICS CO., LTD.**
**Suwon-si,**
**Gyeonggi-do 442-742 (KR)**

(72) Inventors:
  • **Choi, Jin-hyeon**
    **Seoul (KR)**
  • **Park, Jeong-hun**
    **Gyeonggi-do (KR)**
  • **Kim, Jin-min**
    **Seoul (KR)**
  • **Lee, Yang-ju**
    **Seoul (KR)**
  • **Ahn, Young-joon**
    **Yeongtong-gu, Suwon-si**
    **Gyeonggi-do (KR)**

(74) Representative: **Clark, David James**
    **Appleyard Lees**
    **15 Clare Road**
    **Halifax, Yorkshire HX1 2HY (GB)**

(54) **Method of and apparatus for reproducing compressed video streams**

(57) A method of reproducing a compression-encoded video data stream includes receiving an input point of time at which a user desires a reproduction operation, determining the type of a picture frame corresponding to the input point of time, extracting a reference frame required for decoding the picture frame corresponding to the input point of time according to the determined type of the picture frame, and decoding the picture frame corresponding to the input point of time using the extracted reference frame and outputting the decoded picture frame.

FIG. 2

EP 1 868 391 A1

**Description**

Aspects of the present invention relate to a method of reproducing a compression-encoded video data stream, and more particularly, to a method and apparatus by which the output of and fast search for a video data stream can be implemented in a media player at a specific point of time.

According to a conventional method for reproducing a compression-encoded video data stream, when decoding and reproducing intra (I) pictures, predictive (P) pictures, and bidirectional predictive (B) pictures included in a group of pictures (GOP), the reproduction and output of a video are performed based on the I pictures. This is because encoded video data is generated based on past and future picture data, and such information is not available from a single picture in a moving picture experts group (MPEG) system. However, since an I picture has itself complete information, it can be reproduced without using information of another picture, and data of other pictures can be reproduced using the I picture. The I picture is a type of picture that guarantees independency of a GOP. Due to the I picture, a random access can be made in units of a GOP having several frames of picture data. Thus, according to the conventional method, even when it is desired to output a picture at an accurate location corresponding to a specific point of time, only an I picture frame that is most temporally adjacent to the specific point of time is output. As a result, when a user desires to execute a fast forward search and a reverse search in units of one minute, for example, such operations are not supported.

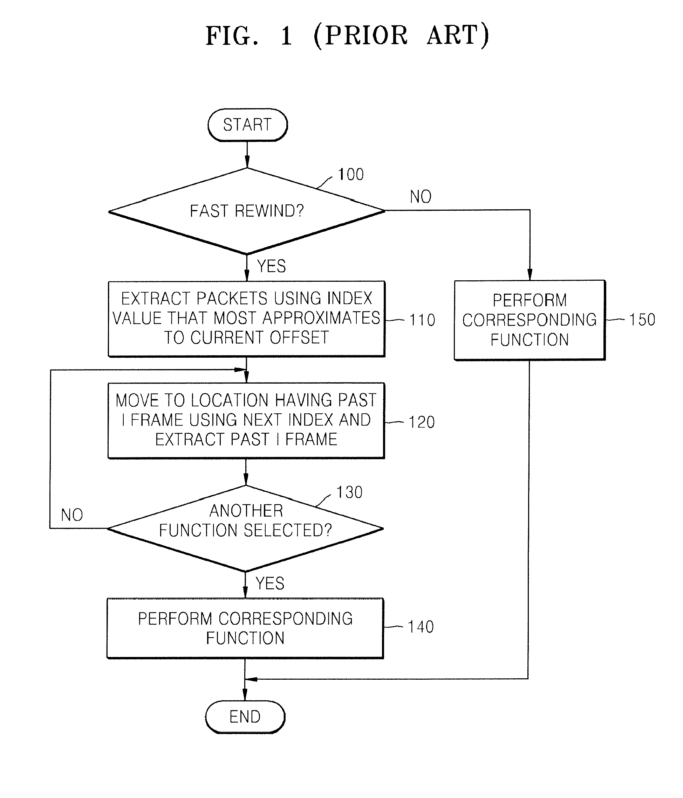

FIG. 1 is a flowchart illustrating a conventional fast rewind method.

Referring to FIG. 1, the conventional fast rewind method includes determining in operation 100 that fast rewind is selected; performing another function in operation 150 if fast rewind is not selected by a user's key manipulation; if fast rewind is selected in operation 100, extracting packets, which range from a current offset to a picture start code of a next frame, from a program stream storing unit by using an index value that approximates closest to the current offset and is found in an index storing unit by an index searching unit, and displaying the extracted packets in operation 110; moving to a location having a past I frame using a next entry index value of the index storing unit, found by the index searching unit and extracting and displaying the past I frame in operation 120; determining whether another function is selected in operation 130; if another function is selected, performing a corresponding function in operation 140; and if another function is not selected, repeating operation 120.

According to the rewind method, the index storing unit receives an index value of a start portion of a packet having a picture start code of an I frame in a video stream through a program stream demultiplexer and decoder and stores the received index value and, if fast rewind is required, the program stream storing unit extracts and displays only the I frame. In other words, a program stream extracting unit extracts an MPEG program stream stored in the program stream storing unit using an index value, which is stored in the index storing unit, of a start portion of a packet having a picture start code of an I frame in a video stream and the extracted MPEG program stream is reproduced during fast rewind.

Thus, according to the conventional method of reproducing a compression-encoded video data stream, reproduction and output are performed based on an I picture frame during forward playback as well as fast rewind. As a result, it is not possible to output a picture frame at an accurate location corresponding to an accurate time desired by a user. Preferred embodiments of the present invention aim to address this issue with such conventional methods.

According to one aspect of the present invention, there is provided a method of reproducing a compression-encoded video data stream, the method comprising: receiving an input point of time at which a user desires a reproduction operation, determining the type of a picture frame corresponding to the input point of time, extracting a reference frame required for decoding the picture frame corresponding to the input point of time according to the determined type of the picture frame, and decoding the picture frame corresponding to the input point of time using the extracted reference frame and outputting the decoded picture frame.

According to another aspect of the present invention, there is provided a method of fast searching for a compression-encoded video data stream, the method comprising: receiving a desired search time unit, determining the type of a picture frame corresponding to the received search time unit, extracting a reference frame required for decoding the picture frame corresponding to the search time unit according to the determined type of the picture frame, and decoding the picture frame corresponding to the search time unit using the extracted reference frame and outputting the decoded picture frame.

According to another aspect of the present invention, there is provided an apparatus for reproducing a compression-encoded video data stream, the apparatus comprising: an input unit, a control unit, an extraction unit, and an output unit. The input unit receives an input point of time at which a user desires a reproduction operation. The control unit determines the type of a picture frame corresponding to the input point of time. The extraction unit extracts a reference frame required for decoding the picture frame corresponding to the input point of time according to the determined type of the picture frame. The output unit decodes the picture frame corresponding to the input point of time using the extracted reference frame and outputting the decoded picture frame.

According to another aspect of the present invention, there is provided an apparatus for fast searching for a compression-encoded video data stream. The apparatus includes an input unit, a control unit, an extraction unit, and an output unit. The input unit receives a desired search time unit. The control unit determines the type of a picture frame corresponding to the received search time unit. The extraction unit extracts a reference frame required for decoding the picture frame corresponding to the search time unit according to the determined type of the picture frame. The output unit decodes the picture frame corresponding to the search time unit using the extracted reference frame and outputs the decoded picture frame.

According to another aspect of the present invention, there is provided a method of fast searching in a compression-encoded video data stream, the method comprising: receiving a selected input point of time, a selected unit search time and a selected direction of search; determining the type of picture frame corresponding to the selected input point of time; extracting a reference frame required for decoding the picture frame corresponding to the selected input point of time according to the determined type of picture frame; decoding the picture frame corresponding to the selected input point of time using the extracted reference frame and outputting the decoded picture frame; calculating a new input point of time by adding or subtracting the unit search time according to the direction of search, and repeatedly receiving a calculated input point of time, determining the type of picture frame corresponding to the calculated input point of time, extracting a reference frame required for decoding the picture frame corresponding to the calculated input point of time according to the determined type of picture frame; decoding the picture frame corresponding to the calculated input point of time using the extracted reference frame and outputting the decoded picture frame; and calculating a new input point of time by adding or subtracting the unit search time according to the direction of search until the fast searching is completed.

According to another aspect of the present invention, there is provided an apparatus for fast searching for a compression-encoded video data stream, the apparatus comprising: an input unit to receive a input point of time, a selected unit search time and a selected direction of search; a control unit to determine the type of picture frame corresponding to the received input point of time; an extraction unit to extract a reference frame required for decoding the picture frame corresponding to the received input point of time according to the determined type of picture frame; and an output unit to decode the picture frame corresponding to the received input point of time using the extracted reference frame, to output the decoded picture frame, and to calculate and output to the input unit a new input point of time based on the selected unit search time and selected direction of search.

According to another aspect of the present invention, there is provided a computer-readable recording medium having recorded thereon a program for implementing the method of reproducing a compression-encoded video data stream and the method of fast searching for a compression-encoded video data stream according to the above-mentioned aspects.

According to another aspect of the present invention, there is provided a computer data signal embodied in a carrier wave comprising a computer readable code implementing the method of reproducing a compression-encoded video data stream and the method of fast searching for a compression-encoded video data stream according to the above-mentioned aspects.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:

FIG. 1 is a flowchart illustrating a conventional fast rewind method;

FIG. 2 is a flowchart illustrating a method of reproducing a compression-encoded video data stream according to an embodiment of the present invention;

FIG. 3A and 3B are flowcharts illustrating a method of reproducing a compression-encoded video data stream according to another embodiment of the present invention;

FIG. 4 illustrates the structure of vop_coding_type indicating the type of a picture frame;

FIG. 5A is a representation for comparing the order of picture frames in a reproducing order and the order of picture frames in a decoding order;

FIG. 5B is another representation for comparing the order of picture frames in a reproducing order and the order of picture frames in a decoding order;

FIG. 6 is a flowchart illustrating a method of reproducing a compression-encoded video data stream according to another embodiment of the present invention;

FIG. 7 is a flowchart illustrating a method of fast searching for a compression-encoded video data stream according to an embodiment of the present invention;

FIG. 8 is a block diagram of an apparatus for reproducing a compression-encoded video data stream according to an embodiment of the present invention;

FIG. 9 is a detailed block diagram of a control unit illustrated in FIG. 8;

FIG. 10 is a detailed block diagram of an extraction unit and an output unit for use in the apparatus illustrated in FIG. 8; and

FIG. 11 is a detailed block diagram of another extraction unit and an output unit for use in the apparatus illustrated in FIG. 8.

Reference will now be made in detail to the present embodiments of the present invention, examples of which are illustrated in the accompanying drawings.

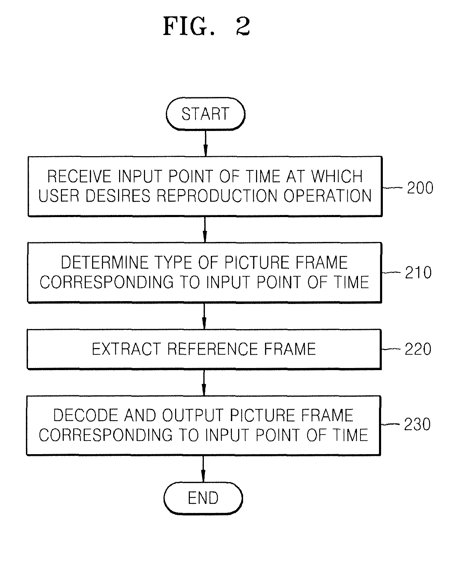

FIG. 2 is a flowchart illustrating a method of reproducing a compression-encoded video data stream according to an embodiment of the present invention.

Referring to FIG. 2, the method includes receiving an input point of time at which a user desires a reproduction operation in operation 200, determining the type of a picture frame corresponding to the input point of time in operation 210, extracting a reference frame required to decode the picture frame corresponding to the input point of time according to the determined type of the picture frame in operation 220, and decoding the picture frame corresponding to the input point of time using the extracted reference frame and outputting the decoded picture frame in operation 230.

In operation 200, the input point of time at which the user desires a reproduction or output operation on a video data stream is received. In this operation, the input point of time time required for reproducing, outputting, or printing a specific picture corresponding to the time is input through various digital devices such as a personal digital assistant (PDA), a notebook, a portable terminal, a portable multimedia player (PMP), or a video printer for example.

In operation 210, the type of the picture frame corresponding to the input point of time is determined. In a moving picture experts group (MPEG) system, picture frames constituting a group of pictures (GOP) include three types of pictures, i.e., intra (I) pictures, predictive (P) pictures, and bidirectional-predictive (B) pictures. The I picture is obtained by independent encoding in itself regardless of past and future pictures. In other words, motion estimation in a temporal direction is not applied to the I picture and the I picture can be encoded and decoded using only information within itself. The P picture is obtained by forward predictive encoding between pictures. In other words, encoding is performed using an interframe prediction with an I picture or a P picture as a prediction picture. However, only forward (unidirectional) prediction using a macroblock of a temporally past frame of the current frame can be applied for prediction of a macroblock of the current frame. The B picture is obtained by predictive encoding in both past and future directions. In other words, a block is predicted from a past reference block and a future reference block using an I picture or a P picture as a prediction picture. It is possible to perform bidirectional prediction using a macroblock in a past direction, a future direction, or both of them with respect to the current frame on a time axis.

In other words, the I picture frame is an intra encoding frame (a frame to be encoded using information within itself), the P picture frame is a predictive encoding frame (a frame to be forward predictive-encoded using information between frames), and the B picture frame is a bidirectionally predictive-encoding frame (a frame to be bidirectionally predictive-encoded). Thus, the type of a corresponding picture frame is determined, and whether and how to extract a reference frame required for prediction during decoding varies according to the determined type of the picture frame.

In operation 220, a reference frame is extracted. If the type of the picture frame is determined to be a P picture frame in operation 210, since forward (unidirectional) prediction is used that encodes the P picture frame by interframe prediction using an I picture or a P picture as a prediction picture and uses a macroblock in a past frame of the P picture frame on the time axis, a past I picture frame is extracted. Since motion estimation in a temporal direction is not applied to an I picture frame and since the I picture frame can be encoded using only information within itself, the I picture frame is selected as a reference frame. If the type of the picture frame is determined to be a B picture frame in operation 210, since bidirectional prediction is used that predicts a block from a past reference block and a future reference block using an I picture or a P picture as a prediction picture, i.e., using a macroblock in a past direction, a future direction, or both with respect to the current frame on a time axis, a past I picture frame and a future I picture frame or P picture frame are extracted as reference frames.

In operation 230, the picture frame corresponding to the input point of time is predictive-decoded using the reference frame(s) and is output. For example, if the type of the picture frame corresponding to the input point of time is a B picture frame, a past I picture frame and a future I picture frame or P picture frame are extracted as reference frames and the B picture frame is decoded for reproduction using the extracted reference frames. If the type of the picture frame corresponding to the input point of time is a P picture frame, only a past I picture frame is extracted and the P picture frame is decoded for reproduction using the extracted reference frame. If the type of the picture frame corresponding to the input point of time is an I picture frame, the I picture frame is extracted and output.

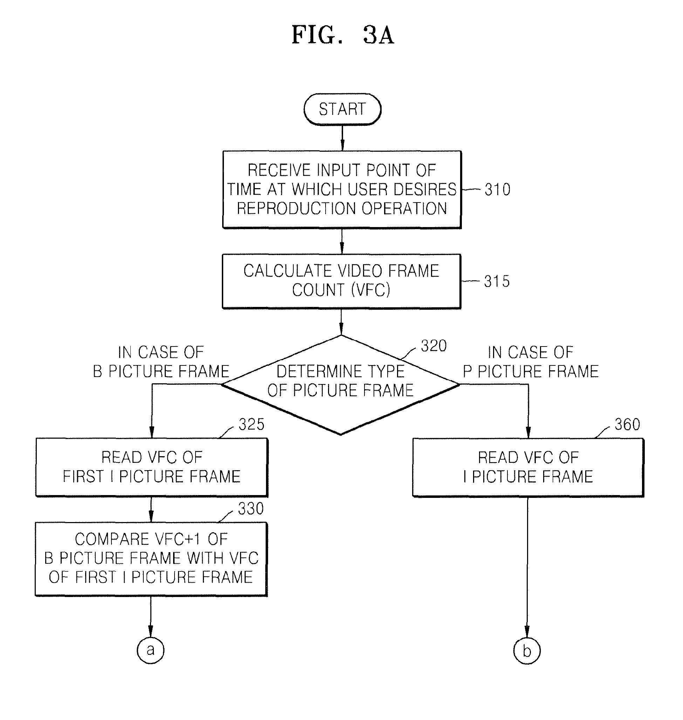

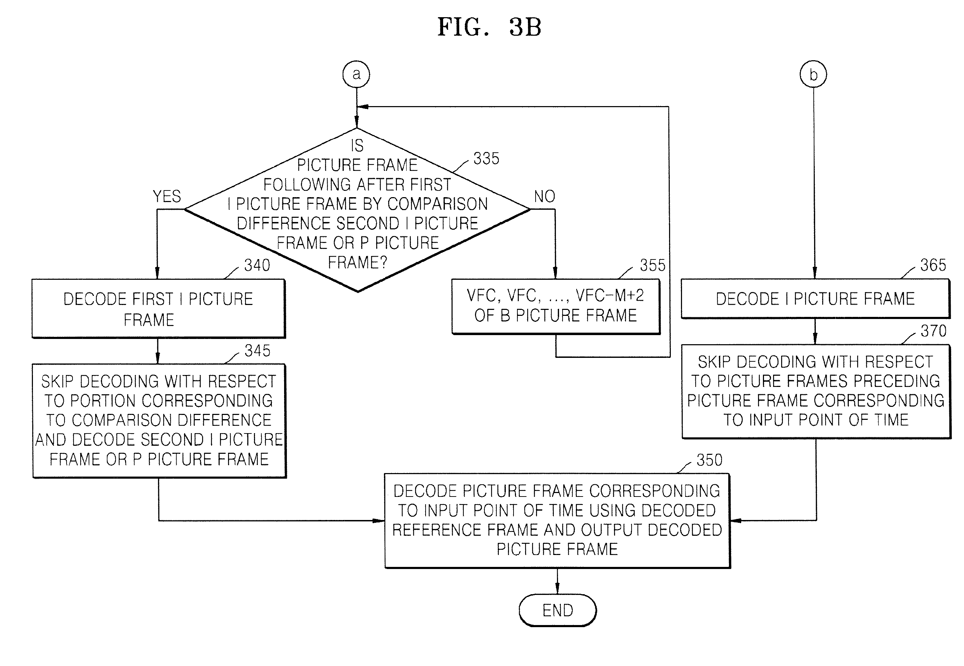

FIGS. 3A and 3B are flowcharts illustrating a method of reproducing a compression-encoded video data stream according to another embodiment of the present invention. Although the flowcharts constitute one method, they are illustrated separately in FIG 3A and FIG. 3B on account of limited space.

In operation 310, an input point of time at which a user desires a reproduction or output operation on a video data stream is received. For example, if the input point of time is 2 minutes and 30 seconds, it may be input from the user or may be specified using a control device of a video output system.

In operation 315, a video frame count (VFC) corresponding to the input point of time is calculated. Since the input point of time is expressed by a time unit (sec) and the unit of processing of a system is a frame count, conversion between those units is required as follows:

$$\text{targetVidCnt} = (\text{timeStamp} * \text{pm->ticksPerSec[pm->videoTrack]} /$$

$$(\text{pm->ticksPerFrame[pm->videoTrack]} * 1000.0) \quad \ldots\ldots\ldots\ldots\ldots\ldots\ldots\ldots\ldots\ldots\ldots (1),$$

where targetVidCnt is a VFC to be calculated, timestamp is an input point of time, pm is a program memory pointer, videoTrack is a delimiter of a currently reproduced video data stream, ticksPerSec is the number of system clock ticks per second, and ticksPerFrame is the number of system clock ticks per frame. Appropriate adjustments can be made if the time unit is smaller than seconds. For Example, if the unit of the input point of time is 1/1000 second (ms), it is made identical to the unit of processing by being multiplied by 1000.0.

Using the conversion equation, the input point of time is converted into a VFC of a specific picture (picture frame) corresponding to the input point of time for calculation.

In operation 320, a picture frame corresponding to the input point of time is searched for in picture frames included in the video data stream using the VFC calculated in operation 315 and the type of the found picture frame is determined. If the type of the found picture frame is determined to be an I picture frame, it is an intra picture and thus can be obtained by independent encoding within itself regardless of a past or future picture. As a result, the I picture frame is decoded and output without the need for extraction of a reference frame. Therefore, it is not necessary to describe the outputting of an I picture frame in detail.

In operation 325, if the type of the found picture frame is determined to be a B picture frame in operation 320, a VFC of a past I picture frame is read to extract a past reference frame. The past I picture frame that is closest to the B picture frame is selected using index information included in the video data stream to be reproduced.

In operation 330, a comparison difference between a result (VFC+1) of adding 1 to the VFC of the picture frame corresponding to the input point of time and the VFC of the I picture frame (hereinafter, referred to as a first I picture frame) read in operation 325 is obtained.

In operation 335, it is checked if a picture frame following after the first I picture frame by the comparison difference calculated in operation 330 is an I picture frame (hereinafter, referred to as a second I picture frame) or a P picture frame. This is intended to read the VFC of a past second I picture frame or a P picture frame that is closest to the B picture frame in a decoding order.

When it is checked if the picture frame is the second I picture frame or the P picture frame, determination of the type of the picture frame can be calculated by an AND operation and a shift operation using a vop_coding_type indicating the type of the picture frame included in the video data stream and data information indicating 1-byte data after 4 bytes from a start point of a start code of the picture frame, as follows:

$$\text{vop\_coding\_type} = (\text{data \& 0xC0}) >> 6 \quad \ldots\ldots\ldots\ldots\ldots\ldots\ldots\ldots\ldots (2)$$

In operation 355, if the picture frame following after the first I picture frame by the calculated comparison difference is not an I picture frame or a P picture frame in operation 335, the VFC of the B picture frame corresponding to the input point of time, VFC-1, ..., VFC-M+2 are sequentially checked. Here, M indicates an interval at which an I picture frame or a P picture frame appears in a GOP. At this time, the comparison difference calculated in operation 330 is changed into a value obtained by adding (M-2) to a comparison difference between the checked VFC and the VFC of the first I picture frame.

In operation 340, if the picture frame in operation 335 is a second I picture frame or a P picture frame, the VFC of the picture frame is read and a picture frame corresponding to the VFC of the first I picture frame read in operation 325 is decoded.

In operation 345, during decoding, decoding with respect to a portion corresponding to the comparison difference calculated in operation 330 is skipped without decoding picture frames following after the first I picture frame and only the second I picture frame or the P picture frame checked in operation 335 is decoded.

In operation 350, the B picture frame corresponding to the input point of time is decoded using the reference frames decoded in operations 340 and 345 and is finally output.

In operation 360, if the picture frame in operation 320 is a P picture frame, the VFC of a past I picture frame is read to extract a past reference frame. At this time, a past I picture frame that is closest to the P picture frame is selected using index information included in the video data stream to be reproduced.

In operation 365, as in operation 340, the picture frame corresponding to the VFC of the I picture frame read in operation 360 is decoded.

In operation 370, during decoding, decoding with respect to picture frames preceding the P picture frame corresponding to the input point of time is skipped without decoding picture frames following after the I picture frame.

In operation 350, the P picture frame corresponding to the input point of time is decoded using the reference frame decoded in operation 365 and is finally output.

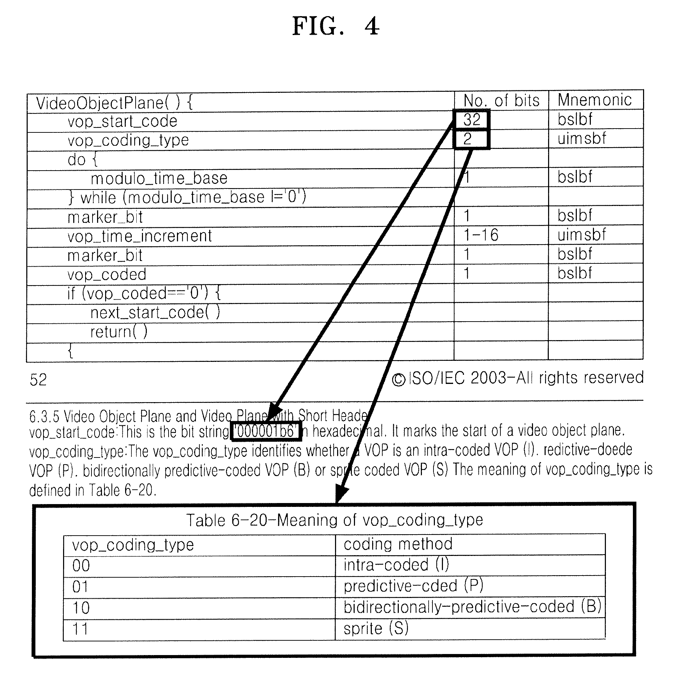

FIG. 4 illustrates the structure of a vop_coding_type indicating the type of a picture frame.

Referring to FIG. 4, a bitstream structure of a frame (picture) called a video object plane is illustrated. A start code is composed of 32 bits, i.e., 4 bytes, and a vop_coding_type indicating the type of a frame is composed of 2 bits. Thus, 2 bits of vop_coding_type, 00, 01, and 10 indicate an I picture, a P picture, and a B picture, respectively.

The 2 bits 00, 01, and 10 can be distinguished as follows:

$$\text{vop\_coding\_type} = (\text{data \& 0xC0}) >> 6 \quad \dots\dots\dots\dots\dots\dots\dots\dots\dots\dots\dots\dots (3),$$

where vop_coding_type indicates the type of a picture frame included in a video data stream, data indicates 1-byte data after 4 bytes from a start point of a start code of the picture frame, and 0xC0 indicates a hexadecimal hexa code of 11000000. By performing an AND operation on 0xC0 and data and performing a shift operation to the right by 6 bits, the 2 bits 00, 01, and 10 can be distinguished.

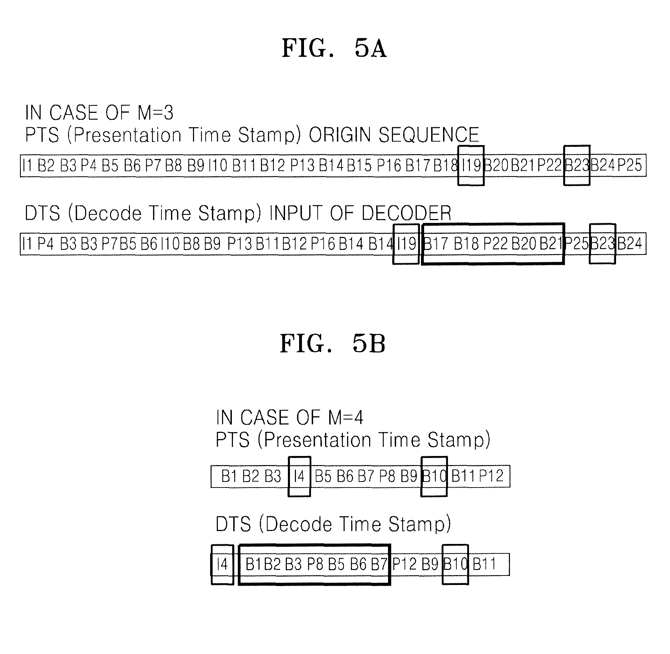

FIG. 5A is an illustration of comparing the order of picture frames in a reproducing order and the order of picture frames in a decoding order.

Referring to FIG. 5A, if M, which indicates an interval at which an I picture frame or a P picture frame appears in a GOP, is 3, two (=M-1) B picture frames are consecutively located and I picture frames or P picture frames are located at both ends of those B picture frames.

For example, if a specific picture frame corresponding to a specific point of time for output (e.g., 2 minutes and 30 seconds) is B23, the VFC of the B picture frame is 23 and the VFC of a past I picture frame (first I picture frame) that is closest to the B picture frame B23 is 19. A comparison difference between VFC+1, i.e., 24 and VFC of the first I picture frame, i.e., 19, is 5. Thus, decoding with respect to 5 picture frames after decoding of the first I picture frame can be skipped on a decode time stamp (DTS), a P picture frame P25 following after the 5 picture frames is decoded, and the B picture frame B23 is decoded using the reference frames, and is output. Since unnecessary decoding time can be reduced, the specific B picture frame can be searched for and output within a short period of time.

FIG. 5B is another illustration of comparing the order of picture frames in a reproducing order and the order of picture frames in a decoding order.

Referring to FIG. 5B, if M is 4, three (=M-1) B picture frames are consecutively located, and I picture frames or P picture frames are located at both ends of those B picture frames.

For example, if a specific picture frame corresponding to the input point of time (e.g., 2 minutes and 30 seconds) is B10, the VFC of the B picture frame is 10 and the VFC of a previous I picture frame (first I picture frame) that is closest to the B picture frame is 4. A comparison difference between a result (VFC+1=11) of adding 1 to the VFC of the B picture frame corresponding to the input point of time and the VFC(=4) of the first I picture frame is 7. Thus, decoding with respect to 7 picture frames following after the first I picture frame on a DTS can be skipped, a P picture frame P12 following after the 7 picture frames is decoded, and the B picture frame B10 is decoded using the reference frame and is output.

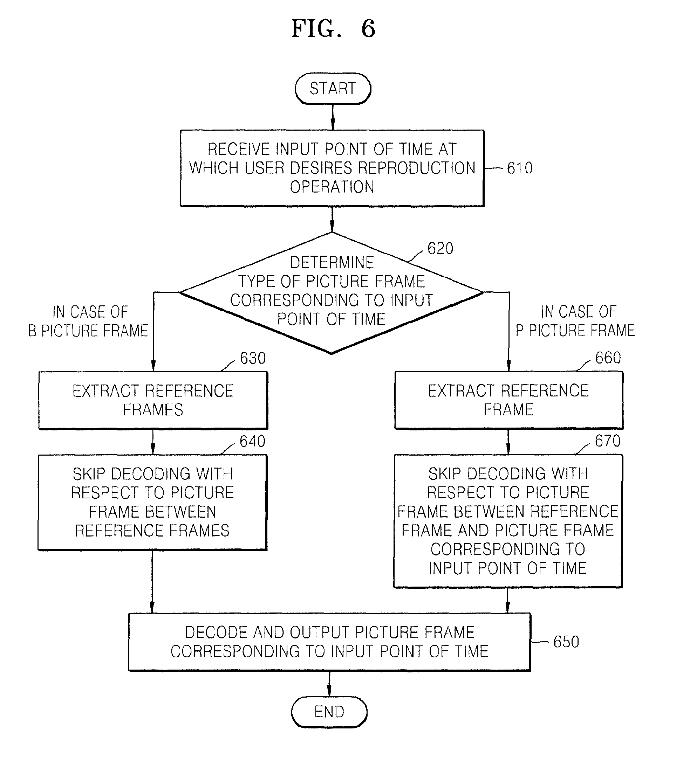

FIG. 6 is a flowchart illustrating a method of reproducing a compression-encoded video data stream according to another embodiment of the present invention.

Referring to FIG. 6, the method includes receiving an input point of time at which a user desires a reproduction operation in operation 610, determining the type of a picture frame corresponding to the input point of time in operation 620, extracting reference frames required to decode the picture frame corresponding to the input point of time if the type of the picture frame is determined to be a B frame picture in operation 630, skipping decoding for a picture frame between the reference frames in operation 640, extracting a reference frame required to decode the picture frame corresponding to the input point of time if the type of the picture frame is determined to be a P picture frame in operation 660, skipping decoding for a picture frame between the reference frame and the picture frame corresponding to the input point of time in operation 670, and decoding the picture frame corresponding to the input point of time using the extracted reference frame and outputting the decoded picture frame in operation 650.

In other words, if the type of the picture frame corresponding to the input point of time is determined to be a B picture frame in operation 620, decoding with respect to a picture frame between reference frames (an I picture and a P picture) required for decoding the B picture frame is skipped and only the reference frames are decoded, thereby decoding and outputting the B picture frame within a short period of time.

If the type of the picture frame corresponding to the input point of time is determined to be a P picture frame in operation 620, decoding with respect to a picture frame between a reference frame (I picture) required for decoding the P picture frame and the P picture frame is skipped and only the reference frame and the P picture frame are decoded and output.

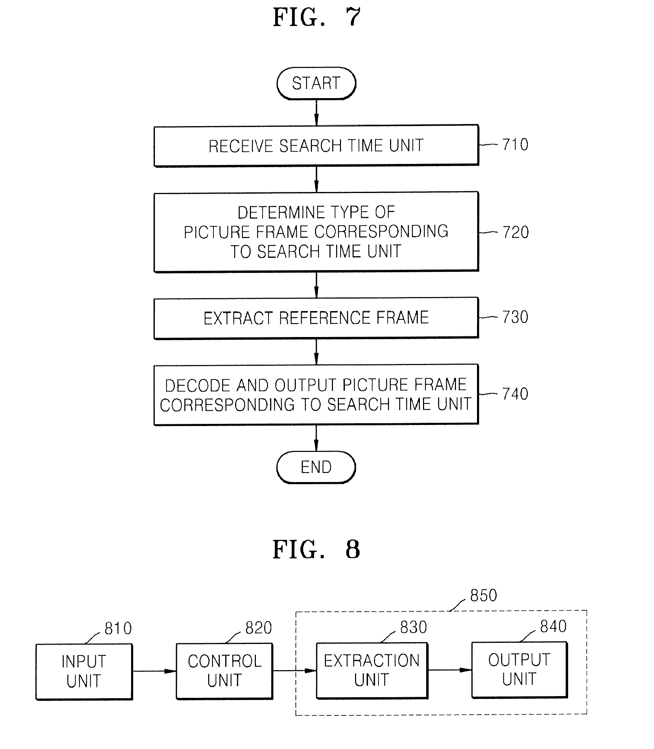

FIG. 7 is a flowchart illustrating a method of fast searching for a compression-encoded video data stream according to an embodiment of the present invention.

Referring to FIG. 7, the method includes receiving a search time unit for fast search in operation 710, determining the type of a picture frame corresponding to the search time unit in operation 720, extracting a reference frame required for decoding the picture frame corresponding to the search time unit according to the determined type of the picture frame in operation 730, and decoding the picture frame corresponding to the search time unit using the extracted reference frame and outputting the decoded picture frame in operation740.

In operation 710, the search time unit for a fast search is received. For example, the search time unit could be input as intervals of 10 seconds, and a corresponding picture can be output and a fast search (FF, RW) performed at intervals of 10 seconds. Operations 720 through 740 are the same as operations of the method of reproducing the video data stream at a specific point of time (e.g., 2 minutes and 10 seconds, 2 minutes and 20 seconds) corresponding to the input search time unit. The search time unit can be automatically changed over search duration time. As a non-limiting example, the search time unit may gradually increase from the unit of 10 seconds to 30 seconds, 1 minute, 5 minutes, and 10 minutes.

FIG. 8 is a block diagram of an apparatus to reproduce a compression-encoded video data stream according to an embodiment of the present invention.

Referring to FIG. 8, the apparatus includes an input unit 810, a control unit 820, an extraction unit 830, and an output unit 840.

The input unit 810 receives and processes an input point of time at which a user desires a reproduction or output operation on a video data stream.

The control unit 820 calculates the VFC of a picture frame corresponding to the input point of time and determines the type of the picture frame.

The extraction unit 830 extracts a reference frame required for decoding the picture frame corresponding to the input point of time according to the determined type of the picture frame. If the type of the picture frame is determined to be a B picture frame by the control unit 820, a first I picture frame and a second I picture frame (or a P picture frame) required for decoding the B picture frame are extracted and processed.

The output unit 840 includes a decoder, decodes the picture frame using the reference frames extracted by the extraction unit 830, and displays the decoded picture frame.

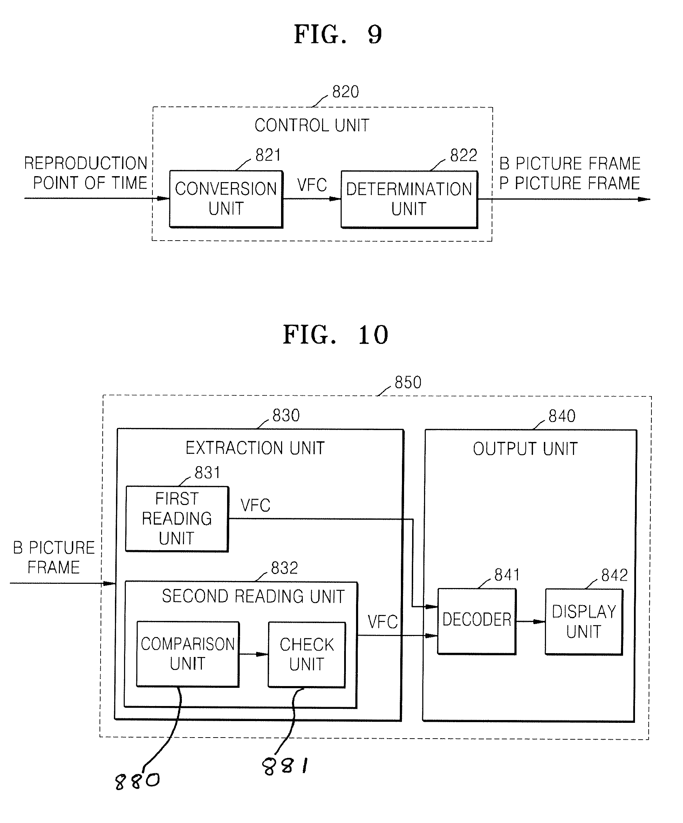

FIG. 9 is a detailed block diagram of the control unit 820 illustrated in FIG. 8 according to an embodiment of the present invention.

Referring to FIG. 9, the control unit 820 includes a conversion unit 821 and a determination unit 822. The conversion unit 821 calculates a VFC corresponding to the input point of time. Since the input point of time is expressed by a time unit (such as, for example, seconds) and the unit of processing of a system is a frame count, conversion between those units is required and is performed using Equation 1 described above.

$$\text{targetVidCnt} = (\text{timeStamp} * \text{pm->ticksPerSec[pm->videoTrack]} / $$

$$(\text{pm->ticksPerFrame[pm->videoTrack]} * 1000.0) \quad \ldots\ldots\ldots\ldots\ldots\ldots\ldots\ldots\ldots (1),$$

where targetVidCnt is a VFC to be calculated, timestamp is an input point of time, pm is a program memory pointer, videoTrack is a delimiter of a currently reproduced video data stream, ticksPerSec is the number of system clock ticks per second, and ticksPerFrame is the number of system clock ticks per frame. Appropriate adjustments can be made if the time unit is smaller than seconds. For example, if the unit of the input point of time is 1/1000 second (ms), it is made identical to the unit of processing by being multiplied by 1000.0.

The input point of time undergoing the conversion is converted into the VFC of a specific picture (picture frame) corresponding to the input point of time and is transmitted to the determination unit 822.

The determination unit 822 searches for a picture frame corresponding to the input point of time among picture frames included in a video data stream and determines the type of the found picture frame. At this time, referring to FIG. 4, since the vop_coding_type indicating the type of the picture frame is composed of 2 bits, the type of the picture frame can be identified according to whether the 2 bits are 00, 01, or 10 using Equation 3 as follows:

$$\text{vop\_coding\_type} = (\text{data \& 0xC0}) >> 6 \quad \dots\dots\dots\dots\dots\dots\dots\dots\dots\dots \text{(3)},$$

where vop_coding_type indicates the type of a picture frame included in a video data stream, data indicates 1-byte data after 4 bytes from a start point of a start code of the picture frame, and 0xC0 indicates a hexadecimal hexa code of 11000000. By performing an AND operation on 0xC0 and data and performing a shift operation to the right by 6 bits, the 2 bits 00, 01, and 10 can be distinguished.

FIG. 10 is a detailed block diagram 850 of the extraction unit 830 and the output unit 840 illustrated in FIG. 8 according to an embodiment of the present invention.

Referring to FIG. 10, the extraction unit 830 may include a first reading unit 831 and a second reading unit 832. If the determination unit 822 determines that the type of the picture frame is a B picture frame, a bidirectional prediction using a macroblock in a past direction, a future direction, or both with respect to the current frame on a time axis is performed using an I picture or a P picture as a prediction picture. Thus, the first reading unit 831 reads the VFC of a past I picture frame that is closest to the B picture frame using index information included in the video data stream, and the second reading unit 832 reads the VFC of a second I picture frame or a P picture frame that is closest to the B picture frame in a decoding order of the video data stream. The second reading unit 832 may include a comparison unit 880 for comparing a result (VFC+1) of adding 1 to the VFC of the B picture frame and the VFC of the first I picture frame and a check unit 881 for checking if a picture frame following after the first I picture frame by the comparison difference is a second I picture frame or a P picture frame. The output unit 840 may include a decoder 841 to decode the first I picture frame, skipping decoding with respect to a portion corresponding to the comparison difference after the first I picture frame, decoding the second I picture frame or the P picture frame, and decoding a picture frame corresponding to the input point of time using the decoded reference frame, and a display unit 842 for outputting the decoded picture frame corresponding to the input point of time.

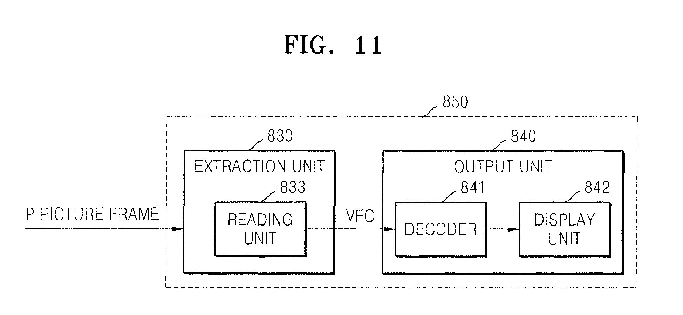

FIG. 11 is a detailed block diagram 850 of the extraction unit 830 and the output unit 840 illustrated in FIG. 8 according to another embodiment of the present invention.

Referring to FIG. 11, the extraction unit 830 may include a reading unit 833. If the determination unit 822 determines that the type of the picture frame is a P picture frame, a forward (unidirectional) prediction is used that encodes the P picture frame by interframe prediction using an I picture or a P picture as a prediction picture and uses a macroblock in a past frame of the P picture frame on the time axis. Thus, the reading unit 833 extracts the VFC of the past I picture frame. Since motion estimation in a temporal direction is not applied to an I picture frame and the I picture frame can be encoded using only information within itself, the decoder 841 to decode the I picture frame skips decoding with respect to a picture frame following after the I picture frame, and decodes the picture frame corresponding to the input point of time using the decoded reference frame. A display unit 842 displays the decoded picture frame corresponding to the input point of time.

Meanwhile, the method of reproducing a compression-encoded video data stream and the method of fast searching for a compression-encoded video data stream according to aspects of the present invention can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. Aspects of the present invention may also be embodied in computer-readable code embodied as a computer data signal in a carrier wave (e.g., a signal transmitted over the Internet). The computer-readable code embodied as a computer data signal in a carrier wave can also be distributed over network coupled computer systems so that the computer-readable code is stored and executed in a distributed fashion.

As described above, according to aspects of the present invention, a P picture frame and a B picture frame as well as an I picture frame corresponding to a specific point of time can be output and a specific picture frame can be decoded and output in a short period of time. In particular, aspects of the present invention are useful for a device for outputting a frame corresponding to a specific point of time, such as, for example, a video printer.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method of reproducing a compression-encoded video data stream, the method comprising:

    receiving an input point of time at which a user desires a reproduction operation (200);
    determining the type of picture frame corresponding to the input point of time (210);
    extracting a reference frame required to decode the picture frame corresponding to the input point of time according to the determined type of picture frame (220); and
    decoding the picture frame corresponding to the input point of time using the extracted reference frame and outputting the decoded picture frame (230).

2. The method of claim 1, wherein the determining of the type of picture frame corresponding to the input point of time comprises:

    calculating a video frame count (VFC) corresponding to the input point of time (315); and
    determining the type of picture frame found by searching for the picture frame corresponding to the input point of time among picture frames included in the video data stream using the VFC (320).

3. The method of claim 2, wherein the calculating of the video frame count (VFC) corresponding to the input point of time comprises calculating the VFC by multiplying the input point of time by the number of system clock ticks per second and dividing the multiplication result by the number of system clock ticks per frame.

4. The method of claim 1, 2 or 3, wherein if the type of picture frame corresponding to the input point of time is determined to be a bidirectional-predictive (B) picture frame, the extracting of the reference frame required to decode the picture frame corresponding to the input point of time according to the determined type of picture frame comprises:

    reading the VFC of a past first intra (I) picture frame that is closest to the B picture frame using index information included in the video data stream (325); and
    reading the VFC of a past second I picture frame or a predictive (P) picture frame that is closest to the B picture frame in a decoding order of the video data stream (335).

5. The method of claim 4, wherein the reading of the VFC of a past second I picture frame or a predictive (P) picture frame that is closest to the B picture frame in a decoding order of the video data stream comprises:

    comparing (VFC+1), which is a result of adding 1 to the VFC of the B picture frame, and the VFC of the first I picture frame (355); and
    checking if a picture frame following after the first I picture frame by the comparison difference in a decoding order of the video data stream is a second I picture frame or a P picture frame (335).

6. The method of claim 5, wherein if the checked picture frame is neither the second I picture frame nor the P picture frame, then checking if picture frames corresponding to VFC, (VFC-1), through to (VFC-M+2) are the second I picture frame or the P picture frame, in which M is an interval at which an I picture frame or a P picture frame appears in a group of pictures (GOP) (355).

7. The method of claim 5, wherein the decoding of the picture frame corresponding to the input point of time using the extracted reference frame and the outputting of the decoded picture frame comprises:

decoding the first I picture frame (340);
skipping decoding with respect to a portion corresponding to the_comparison difference after the first I picture frame and decoding the second I picture frame or the P picture frame (345); and
decoding the picture frame corresponding to the input point of time using the decoded reference frames and outputting the decoded picture frame (350).

8. The method of any preceding claim, wherein if the type of picture frame corresponding to the input point of time is determined to be a P picture frame, the extracting of the reference frame required to decode the picture frame corresponding to the input point of time according to the determined type of picture frame comprises reading the VFC of a past I picture frame that is closest to the P picture frame using index information included in the video data stream (360).

9. The method of claim 8, wherein the decoding of the picture frame corresponding to the input point of time using the extracted reference frame and outputting the decoded picture frame comprises:

decoding the I picture frame (365); and
skipping decoding with respect to a picture frame following after the I picture frame, decoding the picture frame corresponding to the input point of time using the decoded I picture frame, and outputting the decoded picture frame (370).

10. The method of any preceding claim, wherein if the type of picture frame corresponding to the input point of time is determined to be a B picture frame, the decoding of the picture frame corresponding to the input point of time using the extracted reference frame and outputting the decoded picture frame comprises skipping decoding with respect to a P picture frame or the B picture frame between the extracted reference frames.

11. The method of any preceding claim, wherein if the type of picture frame corresponding to the input point of time is determined to be a P picture frame, the decoding of the picture frame corresponding to the input point of time using the extracted reference frame and outputting the decoded picture frame comprises skipping decoding with respect to the P picture frame or a B picture frame between the extracted reference frame and the picture frame corresponding to the input point of time.

12. A method of fast searching for a compression-encoded video data stream, the method comprising:

receiving a desired unit search time unit;
determining the type of picture frame corresponding to the received search time unit;
extracting a reference frame required for decoding the picture frame corresponding to the search time unit according to the determined type of picture frame; and
decoding the picture frame corresponding to the search time unit using the extracted reference frame and outputting the decoded picture frame.

13. The method of claim 12, wherein the search time unit is automatically changed over a duration of search time.

14. The method of claim 13, wherein the automatically changed search time unit gradually increases.

15. A method of fast searching in a compression-encoded video data stream, the method comprising:

receiving a selected input point of time, a selected search time unit and a selected direction of search (710);
determining the type of picture frame corresponding to the selected input point of time (720);
extracting a reference frame required for decoding the picture frame corresponding to the selected input point of time according to the determined type of picture frame (730);
decoding the picture frame corresponding to the selected input point of time using the extracted reference frame and outputting the decoded picture frame (740);
calculating a new input point of time by adding or subtracting the search time unit according to the direction of search, and
repeatedly receiving a calculated input point of time, determining the type of picture frame corresponding to the calculated input point of time, extracting a reference frame required for decoding the picture frame corresponding to the calculated input point of time according to the determined type of picture frame; decoding the picture frame corresponding to the calculated input point of time using the extracted reference frame and outputting the decoded picture frame; and calculating a new input point of time by adding or subtracting the search time unit according to the direction of search until the fast searching is completed.

16. The method of claim 15, wherein the search time unit is automatically changed over a duration of search time.

17. The method of claim 16, wherein the automatically changed search time unit gradually increases.

18. An apparatus to reproduce a compression-encoded video data stream, the apparatus comprising:

an input unit (810) to receive an input point of time at which a user desires a reproduction operation;
a control unit (820) to determine the type of picture frame corresponding to the input point of time;
an extraction unit (830) to extract one or more reference frames required for decoding the picture frame corresponding to the input point of time according to the determined type of picture frame; and
an output unit (840) to decode the picture frame corresponding to the input point of time using the extracted reference frame and outputting the decoded picture frame.

19. The apparatus of claim 18, wherein the control unit comprises:

a conversion unit (821) to calculate a video frame count (VFC) corresponding to the input point of time; and
a determination unit (822) to determine the type of picture frame found by searching for the picture frame corresponding to the input point of time among picture frames included in the video data stream using the VFC.

20. The apparatus of claim 19, wherein the conversion unit (821) calculates the VFC by multiplying the input point of time by the number of system clock ticks per second and dividing the multiplication result by the number of system clock ticks per frame.

21. The apparatus of claim 18 or 19, wherein the extraction unit (830) comprises a first reading unit (831) and a second reading unit (832) for a bidirectional-predictive (B) picture frame such that if the type of the picture frame is determined by the control unit to be a bidirectional-predictive (B) picture frame,
the first reading unit (831) reads the video frame count (VFC) of a past first intra (I) picture frame that is closest to the B picture frame using index information included in the video data stream; and
the second reading unit (832) reads the VFC of a past second I picture frame or a predictive (P) picture frame that is closest to the B picture frame in a decoding order of the video data stream.

22. The apparatus of claim 21, wherein the second reading unit (832) comprises:

a comparison unit (880) to compare (VFC+1), which is a result of adding 1 to the VFC of the B picture frame, and the VFC of the first I picture frame; and
a check unit (881) to check if a picture frame following after the first I picture frame by the comparison difference in a decoding order of the video data stream is a second I picture frame or a P picture frame.

23. The apparatus of claim 22, wherein if the picture frame checked by the check unit (881) is neither the second I picture frame nor the P picture frame, the check unit sequentially checks whether picture frames corresponding to the VFC, (VFC-1), through to (VFC-M+2) are the second I picture frame or the P picture frame, in which M is an interval at which an I picture frame or a P picture frame appears in a group of pictures (GOP).

24. The apparatus of claim 22, comprising an output unit, the output unit (840) comprising:

a decoder (841) to decode the first I picture frame, skip decoding with respect to a portion corresponding to the comparison difference after the first I picture frame and decode the second I picture frame or the P picture frame, and to decode the picture frame corresponding to the input point of time using the decoded first I picture frame and second I picture frame or the P picture frame; and
a display unit (842) to output the decoded picture frame corresponding to the input point of time.

25. The apparatus of any one of claims 18-24, wherein the extraction unit comprises a reading unit (833) for a predictive (P) picture frame such that if the type of picture frame determined by the control unit is a P picture frame, the reading unit reads the video frame count (VFC) of a past I picture frame that is closest to the P picture frame using index information included in the video data stream.

26. The apparatus of claim 24 or of claim 25 as dependent on claim 24, wherein the output unit comprises:

a decoder to decode the I picture frame, skipping decoding with respect to a picture frame following after the I picture frame, and decoding the picture frame corresponding to the input point of time using the decoded I picture frame; and
a display unit to output the decoded picture frame corresponding to the input point of time.

27. The apparatus of any one of claims 18-26, wherein the extraction unit comprises a first reading unit (831) and a second reading unit (832) for a bidirectional-predictive (B) picture frame and a reading unit (833) for a predictive (P) picture frame and wherein the output unit (840) comprises a decoder (841) and a display unit (842), such that
if the type of the picture frame determined by the control unit is a B picture frame,
the first reading unit (831) reads the video frame count (VFC) of a past first intra (I) picture frame that is closest to the B picture frame using index information included in the video data stream;
the second reading unit (832) reads the VFC of a past second I picture frame or a predictive P picture frame that is closest to the B picture frame in a decoding order of the video data stream; and
the decoder (841) decodes the first I picture frame, skips decoding with respect to a portion corresponding to the comparison difference after the first I picture frame and decodes the second I picture frame or the P picture frame, and decodes the picture frame corresponding to the input point of time using the decoded first I picture frame and second I picture frame or the P picture frame, and
if the type of picture frame determined by the control unit is a P picture frame,
the reading unit (833) reads the video frame count (VFC) of a past I picture frame that is closest to the P picture frame using index information included in the video data stream;
the decoder (841) decodes the I picture frame, skips decoding with respect to a picture frame following after the I picture frame, and decodes the picture frame corresponding to the input point of time using the decoded I picture frame; and
wherein the display unit (842) outputs the decoded picture frame corresponding to the input point of time.

28. The apparatus of any one of claims 18-27, wherein if the type of picture frame determined by the control unit is a B picture frame, the output unit skips decoding with respect to a P picture frame or the B picture frame between extracted reference frames.

29. The apparatus of any one of claims 18-28, wherein if the type of picture frame determined by the control unit is a P picture frame, the output unit skips decoding with respect to the P picture frame or a B picture frame between an extracted reference frame and the picture frame corresponding to the input point of time.

30. An apparatus for fast searching for a compression-encoded video data stream, the apparatus comprising:

an input unit (810) to receive a desired unit search time;
a control unit (820) to determine the type of picture frame corresponding to the received search time unit;
an extraction unit (830) to extract a reference frame required for decoding the picture frame corresponding to the search time unit according to the determined type of picture frame; and
an output unit (840) to decode the picture frame corresponding to the search time unit using the extracted reference frame and outputting the decoded picture frame.

31. The apparatus of claim 30, wherein the search time unit is automatically changed over duration of search time.

32. The apparatus of claim 31, wherein the automatically changed search time unit gradually increases.

33. An apparatus for fast searching for a compression-encoded video data stream, the apparatus comprising:

an input unit (810) to receive a input point of time, a selected unit search time and a selected direction of search; a control unit (830) to determine the type of picture frame corresponding to the received input point of time; an extraction unit (840) to extract a reference frame required for decoding the picture frame corresponding to the received input point of time according to the determined type of picture frame; and

an output unit (840) to decode the picture frame corresponding to the received input point of time using the extracted reference frame, to output the decoded picture frame, and to calculate and output to the input unit a new input point of time based on the selected unit search time and selected direction of search.

34. A computer-readable recording medium having recorded thereon a program for implementing a method of any one of claims 1-17.

35. A computer data signal embodied in a carrier wave comprising a computer readable code implementing the method of any one of claims 1-17.

# FIG. 1 (PRIOR ART)

START

100
FAST REWIND? — NO

YES

EXTRACT PACKETS USING INDEX
VALUE THAT MOST APPROXIMATES
TO CURRENT OFFSET — 110

PERFORM
CORRESPONDING
FUNCTION — 150

MOVE TO LOCATION HAVING PAST
I FRAME USING NEXT INDEX AND
EXTRACT PAST I FRAME — 120

130
NO — ANOTHER
FUNCTION SELECTED?

YES

PERFORM CORRESPONDING
FUNCTION — 140

END

# FIG. 2

START

RECEIVE INPUT POINT OF TIME AT WHICH
USER DESIRES REPRODUCTION OPERATION — 200

DETERMINE TYPE OF PICTURE FRAME
CORRESPONDING TO INPUT POINT OF TIME — 210

EXTRACT REFERENCE FRAME — 220

DECODE AND OUTPUT PICTURE FRAME
CORRESPONDING TO INPUT POINT OF TIME — 230

END

EP 1 868 391 A1

# FIG. 3A

START

RECEIVE INPUT POINT OF
TIME AT WHICH USER DESIRES — 310
REPRODUCTION OPERATION

CALCULATE VIDEO FRAME
COUNT (VFC) — 315

DETERMINE TYPE
OF PICTURE FRAME — 320

IN CASE OF
B PICTURE FRAME

IN CASE OF
P PICTURE FRAME

READ VFC OF
FIRST I PICTURE FRAME — 325

READ VFC OF
I PICTURE FRAME — 360

COMPARE VFC+1 OF
B PICTURE FRAME WITH VFC — 330
OF FIRST I PICTURE FRAME

a

b

# FIG. 3B

EP 1 868 391 A1

# FIG. 4

| VideoObjectPlane( ) { | No. of bits | Mnemonic |
|---|---|---|
| vop_start_code | 32 | bslbf |
| vop_coding_type | 2 | uimsbf |
| do { | | |
| modulo_time_base | 1 | bslbf |
| } while (modulo_time_base !='0') | | |
| marker_bit | 1 | bslbf |
| vop_time_increment | 1-16 | uimsbf |
| marker_bit | 1 | bslbf |
| vop_coded | 1 | bslbf |
| if (vop_coded=='0') { | | |
| next_start_code( ) | | |
| return( ) | | |
| { | | |

52

6.3.5 Video Object Plane and Video Plane with Short Header
vop_start_code:This is the bit string '000001b6' in hexadecimal. It marks the start of a video object plane.
vop_coding_type:The vop_coding_type identifies whether a VOP is an intra-coded VOP (I). redictive-doede
VOP (P). bidirectionally predictive-coded VOP (B) or sprite coded VOP (S) The meaning of vop_coding_type is
defined in Table 6-20.

| Table 6-20-Meaning of vop_coding_type | |
|---|---|
| vop_coding_type | coding method |
| 00 | intra-coded (I) |
| 01 | predictive-cded (P) |
| 10 | bidirectionally-predictive-coded (B) |
| 11 | sprite (S) |

# FIG. 5A

IN CASE OF M=3
PTS (Presentation Time Stamp) ORIGIN SEQUENCE

| I1 B2 B3 P4 B5 B6 P7 B8 B9 I10 B11 B12 P13 B14 B15 P16 B17 B18 I19 B20 B21 P22 B23 B24 P25 |

DTS (Decode Time Stamp) INPUT OF DECODER

| I1 P4 B3 B3 P7 B5 B6 I10 B8 B9 P13 B11 B12 P16 B14 B14 I19 B17 B18 P22 B20 B21 P25 B23 B24 |

# FIG. 5B

IN CASE OF M=4
PTS (Presentation Time Stamp)

| B1 B2 B3 I4 B5 B6 B7 P8 B9 B10 B11 P12 |

DTS (Decode Time Stamp)

| I4 B1 B2 B3 P8 B5 B6 B7 P12 B9 B10 B11 |

# FIG. 6

START

RECEIVE INPUT POINT OF TIME AT
WHICH USER DESIRES REPRODUCTION
OPERATION — 610

DETERMINE
TYPE OF PICTURE FRAME
CORRESPONDING TO INPUT
POINT OF TIME — 620

IN CASE OF
B PICTURE FRAME

IN CASE OF
P PICTURE FRAME

EXTRACT REFERENCE
FRAMES — 630

EXTRACT REFERENCE
FRAME — 660

SKIP DECODING WITH
RESPECT TO PICTURE
FRAME BETWEEN
REFERENCE FRAMES — 640

SKIP DECODING WITH
RESPECT TO PICTURE
FRAME BETWEEN REFERENCE
FRAME AND PICTURE FRAME
CORRESPONDING TO
INPUT POINT OF TIME — 670

DECODE AND OUTPUT PICTURE FRAME
CORRESPONDING TO INPUT POINT OF TIME — 650

END

# FIG. 7

START

| RECEIVE SEARCH TIME UNIT | 710 |

| DETERMINE TYPE OF PICTURE FRAME CORRESPONDING TO SEARCH TIME UNIT | 720 |

| EXTRACT REFERENCE FRAME | 730 |

| DECODE AND OUTPUT PICTURE FRAME CORRESPONDING TO SEARCH TIME UNIT | 740 |

END

# FIG. 8

850

| 810 | 820 | 830 | 840 |

INPUT UNIT → CONTROL UNIT → EXTRACTION UNIT → OUTPUT UNIT

# FIG. 9

```
                          ┌─────────────────── 820
                          │   CONTROL UNIT
                          │      821              822
REPRODUCTION │  ┌──────────┐          ┌──────────────┐ │  B PICTURE FRAME
POINT OF TIME │  │CONVERSION│   VFC    │DETERMINATION │ │  P PICTURE FRAME
─────────────┼─▶│  UNIT    │─────────▶│    UNIT      │─┼────────────────▶
             │  └──────────┘          └──────────────┘ │
             └────────────────────────────────────────┘
```

# FIG. 10

```
        ┌─────────────────────────────────────────────────── 850
        │                                          840
        │    ┌──────────── 830              ┌──────────────────┐
        │    │   EXTRACTION UNIT            │   OUTPUT UNIT     │
        │    │      831                     │                  │
        │    │  ┌────────┐                  │                  │
B PICTURE│    │  │ FIRST  │   VFC           │    841    842     │
FRAME   │    │  │READING │────────────────┐│ ┌────────┐┌───────┐│
────────┼───▶│  │ UNIT   │                ││ │DECODER ││DISPLAY││
        │    │  └────────┘                │└▶│        ││ UNIT  ││
        │    │      832                   └─▶│        │└───────┘│
        │    │  ┌──────────────────┐    VFC  └────────┘         │
        │    │  │SECOND READING UNIT│                           │
        │    │  │ ┌────────┐┌──────┐│                           │
        │    │  │ │COMPARISON│CHECK ││                          │
        │    │  │ │  UNIT  ││ UNIT ││                           │
        │    │  │ └────────┘└──────┘│                           │
        │    │  └──────────────────┘                           │
        │    └──────────────────────┘      └──────────────────┘
        └────────────────────────────────────────────────────┘
```

880    881

# FIG. 11

**European Patent Office**

**EUROPEAN SEARCH REPORT**

Application Number

EP 07 10 1338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/133694 A1 (YEO BOON-LOCK [US]) 17 July 2003 (2003-07-17) | 1-12, 18-30, 34,35 | INV. H04N7/50 |
| A | * abstract * <br><br> * paragraph [0027] - paragraph [0043] * <br> * claim 1 * <br> ----- | 13-17, 31-33 | |
| Y | EP 1 193 709 A2 (MATSUSHITA ELECTRIC IND CO LTD [JP]) 3 April 2002 (2002-04-03) | 12,13, 15,16, 30,31,33 | |
| A | * abstract * <br><br><br> * paragraph [0008] - paragraph [0009] * <br> * paragraph [0028] - paragraph [0032] * <br> * paragraph [0063] - paragraph [0084] * <br> * paragraph [0091] * <br> * paragraph [0154] - paragraph [0168] * <br> ----- | 1-11,14, 17-29, 32,34,35 | |
| Y | EP 1 148 729 A (THOMSON MULTIMEDIA SA [FR]) 24 October 2001 (2001-10-24) | 12,13, 15,16, 30,31,33 | TECHNICAL FIELDS SEARCHED (IPC) <br><br> H04N |
| A | * abstract * <br><br><br> * paragraph [0074] - paragraph [0080] * <br> * paragraph [0095] - paragraph [0111] * <br> * paragraph [0121] - paragraph [0122] * <br> ----- | 1-11,14, 17-29, 32,34,35 | |
| X | WO 03/010970 A (NDS LTD [GB]; DARSHAN EZRA [IL]; DAVIES COLIN JOHN [GB]; BASTABLE IAN) 6 February 2003 (2003-02-06) <br> * abstract * <br> * page 16, line 1 - line 8 * <br> * page 17, last paragraph - page 21, line 30 * <br> ----- | 1,18,34, 35 | |

-/--

The present search report has been drawn up for all claims

| Place of search | Date of completion of the search | Examiner |
|---|---|---|
| Berlin | 18 September 2007 | KONTOPODIS, D |

EPO FORM 1503 03.82 (P04C01)

European Patent
Office

**EUROPEAN SEARCH REPORT**

Application Number

EP 07 10 1338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/08851 A (WOOD ANTHONY [US]; WOODWARD DONALD JR [US]; SHANNON DOUG [US]) 17 February 2000 (2000-02-17) * abstract * * page 6, line 11 - page 7, last line * * claims 1-4,21 * | 12,30,33 | |
| Y | EUNSAM KIM ET AL: "Design and implementation of an enhanced personal video recorder for HDTV" INTERNATIONAL CONFERENCE ON CONSUMER ELECTRONICS. 2001 DIGEST OF TECHNICAL PAPERS. ICCE. LOS ANGELES, CA, JUNE 19 - 21, 2001, NEW YORK, NY : IEEE, US, 19 June 2001 (2001-06-19), pages 316-317, XP010552182 ISBN: 0-7803-6622-0 * abstract * * page 316, right-hand column, last paragraph * | 13,16,31 | |
| A | EP 1 156 674 A (THOMSON MULTIMEDIA SA [FR]) 21 November 2001 (2001-11-21) * abstract * * paragraph [0041] - paragraph [0046] * * paragraph [0062] - paragraph [0076] * | 1-35 | TECHNICAL FIELDS SEARCHED (IPC) |
| A | US 5 959 690 A (TOEBES VIII JOHN A [US] ET AL) 28 September 1999 (1999-09-28) * abstract * * column 10, line 40 - column 16, line 37 * | 1-35 | |

The present search report has been drawn up for all claims

| Place of search | Date of completion of the search | Examiner |
|---|---|---|
| Berlin | 18 September 2007 | KONTOPODIS, D |

EPO FORM 1503 03.82 (P04C01)

## ANNEX TO THE EUROPEAN SEARCH REPORT
## ON EUROPEAN PATENT APPLICATION NO.

EP 07 10 1338

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2007

| Patent document cited in search report | | Publication date | Patent family member(s) | | Publication date |
|---|---|---|---|---|---|
| US 2003133694 | A1 | 17-07-2003 | NONE | | |
| EP 1193709 | A2 | 03-04-2002 | EP | 1193706 A2 | 03-04-2002 |
| | | | EP | 1193707 A2 | 03-04-2002 |
| | | | EP | 1193708 A2 | 03-04-2002 |
| EP 1148729 | A | 24-10-2001 | NONE | | |
| WO 03010970 | A | 06-02-2003 | EP | 1417837 A2 | 12-05-2004 |
| WO 0008851 | A | 17-02-2000 | AU | 5339799 A | 28-02-2000 |
| | | | CA | 2339789 A1 | 17-02-2000 |
| | | | EP | 1106012 A1 | 13-06-2001 |
| | | | JP | 2002522976 T | 23-07-2002 |
| EP 1156674 | A | 21-11-2001 | AT | 286643 T | 15-01-2005 |
| | | | AU | 777957 B2 | 04-11-2004 |
| | | | AU | 4388701 A | 22-11-2001 |
| | | | BR | 0102043 A | 18-12-2001 |
| | | | CN | 1325234 A | 05-12-2001 |
| | | | DE | 60108199 D1 | 10-02-2005 |
| | | | DE | 60108199 T2 | 26-01-2006 |
| | | | ES | 2234729 T3 | 01-07-2005 |
| | | | HK | 1038861 A1 | 20-01-2006 |
| | | | HU | 0101843 A2 | 29-06-2002 |
| | | | JP | 2002027409 A | 25-01-2002 |
| | | | MX | PA01004843 A | 29-10-2004 |
| | | | TW | 530494 B | 01-05-2003 |
| | | | US | 2002001458 A1 | 03-01-2002 |
| | | | ZA | 200103672 A | 15-11-2001 |
| US 5959690 | A | 28-09-1999 | NONE | | |

EPO FORM P0459

For more details about this annex : see Official Journal of the European Patent Office, No. 12/82